# EUROPÄISCHE PATENTSCHRIFT

(11) **EP 2 295 874 B1**
(45) Veröffentlichungstag und Bekanntmachung des Hinweises auf die Patenterteilung: **08.06.2016**
(21) Anmeldenummer: 10008410.2
(22) Anmeldetag: 12.08.2010
(51) Int. Cl.: F24D 19/02, F16L 3/237

(54) **Anordnung aus einer Vorrichtung und Röhren zur lösbaren Halterung der Röhren eines Röhrenheizkörpers**
Arrangement of a device and tubes for removable mounting of tubes of a tube heater
Agencement d'un dispositif et des tuyaux pour une fixation amovible de tuyaux d'un corps tubulaire de chauffage

(30) Priorität: 25.08.2009 DE 202009011545 U
(43) Veröffentlichungstag der Anmeldung: 16.03.2011
(73) Patentinhaber: WEMEFA Horst Christopeit GmbH, 42555 Velbert (DE)
(72) Erfinder: Pega, Adrian, 42549 Velbert (DE)
(74) Vertreter: Buse, Mentzel, Ludewig Patentanwaltskanzlei

(56) Entgegenhaltungen:
- DE-A1- 2 255 166
- DE-U1- 20 019 146
- DE-U1-202008 004 548
- DE-U1-202008 008 049
- DE-U1-202008 008 050
- FR-A1- 2 247 682

## Beschreibung

Die Erfindung betrifft eine Anordnung aus einer Vorrichtung und Röhren zur lösbaren Halterung der Röhren eines Röhrenheizkörpers an einer Konsole, insbesondere einer Wandkonsole oder Standkonsole, gemäß dem Oberbegriff des Anspruchs 1. Eine solche Anordnung ist z.B. aus der DE 20 2008 008 049 U1 bekannt.

Aus dem Stand der Technik sind verschiedene Vorrichtungen zur Klemmhalterung und Befestigung von Röhrenheizkörpern bekannt. In der Regel werden die vertikalen Röhren von Halterungen klemmend umgriffen und in entsprechende Konsolen eingehängt. Das Gebrauchsmuster DE 299 20 643 U1 zeigt einen solchen Klemmhalter, bei dem zwei benachbarte Röhren von einem Klemmelement und einer Widerlagerplatte gefasst und mittels einer die beiden Klemmelemente miteinander verbindenden Klemmschraube verspannt sind und so die Röhren mittels einer Klemmverbindung gehalten werden. Nachteilig bei dieser Konstruktion ist, dass bei einem zu starken Anziehen der Klemmschraube sich die Enden der Widerlagerplatte aufbiegen und von den Röhren des Röhrenheizkörpers lösen. Auch eine vertikale Belastung kann zu einer Verformung der Widerlagerplatte führen. Eine andere Klemmkonstruktion für die Röhren zeigt das Dokument DE 20 2008 008 049 U1. Um hohe Haltekräfte zu erreichen, ist es hier notwendig, zwei schräg zueinander versetzte Wirklinien für die beiden Klemmelemente vorzusehen.

Darüber hinaus sind verbesserte Klemmhalter aufgrund der angekündigten VDE-Vorschriften und TÜV-Normen notwendig, die in Zukunft nur Klemmhalter zulassen, die höhere Haltekräfte bei axialer und vertikaler Belastung aufbringen können.

Aufgabe der vorliegenden Erfindung ist es daher, einen Klemmhalter zur Verfügung zu stellen, der höhere Prüfbelastungen hinsichtlich der Haltekraft erfüllt.

Diese Aufgabe wird mittels einer Anordnung aus einer Vorrichtung und Röhren zur lösbaren Halterung der Röhren eines Röhrenheizkörpers an einer Konsole mit den Merkmalen des Anspruchs 1 erfüllt. Diese erfindungsgemäße Anordnung umfasst in bekannter Weise zwei Klemmelemente, die über eine Klemmschraube miteinander in Verbindung stehen, wobei die Klemmschraube durch mittig an den Klemmelementen vorgesehenen Durchgangsbohrungen geführt ist. Beide Klemmelemente besitzen Formausnehmungen, so dass im Befestigungsfall die Röhren des Röhrenheizkörpers zwischen den Klemmelementen im Bereich der Formausnehmungen verspannbar sind. In ähnlicher Weise wie beim Stand der Technik ist die Kontur dieser Formausnehmungen an dem Umfang der Röhren angepasst. Die Klemmelemente liegen jedoch im Befestigungsfall trotz der angepassten Kontur der Formausnehmung nicht mit der Kontur der Formausnehmung an den Röhren des Röhrenheizkörpers linienförmig an, sondern nur punktförmig, da die Formausnehmungen mit Andruckpunkten versehen sind. Diese Andruckpunkte überragen die Kontur der Formausnehmungen und weisen in Richtung der zu haltenden Röhren, so dass beim Verspannen der Röhren zwischen den Klemmelementen diese Andruckpunkte der Formausnehmungen Kontaktpunkte mit den Röhren des Röhrenheizkörpers darstellen. Diese Andruckpunkte können sowohl bei den Formausnehmungen des vorderen Klemmelementes als auch bei den Formausnehmungen des hinteren Klemmelementes vorgesehen sein. Vorteilhafterweise wird bei jeder Formausnehmung am Anfang und Ende der Kontur ein Andruckpunkt vorgesehen.

Bei einer vorteilhaften Ausführungsform hat zumindest ein Klemmelement mehr als zwei Andruckpunkte und damit Kontaktstellen an den Röhren im Befestigungsfall.

Bei der erfindungsgemäßen Anordnung wirkt demzufolge die durch die Klemmschraube in die Klemmelemente eingebrachte Klemmkraft nur an wenigen Kontaktpunkten. Dies führt auch bei herstellungsbedingten Toleranzen an den Röhren des Röhrenheizkörpers sowie an den Klemmelementen zu einem sicheren Halt der Röhren des Röhrenheizkörpers. Dieser sichere Halt verhindert ein Verdrehen der erfindungsgemäßen Vorrichtung auch in dem Fall, wo das hintere Klemmelement mit einer Konsole verbunden wird, die sich nicht mittig zwischen zwei Röhren eines Röhrenheizkörpers befindet.

Die erfindungsgemäße Anordnung zur lösbaren Halterung von Röhren zeigt des Weiteren eine besonders hohe Stabilität, bewirkt durch die besondere Ausgestaltung, insbesondere des hinteren Klemmelements. Dieses hintere Klemmelement besitzt einen nach vorn weisenden domartigen Abschnitt. Dieser wird zum einen durch die Ober- und Unterplatte des hinteren Klemmelementes gebildet, wobei diese beiden Platten beidseitig vom domartigen Abschnitt flügelartig auslaufen und in diesem Bereich an der Vorderseite die Formausnehmung besitzen, d.h. es sind sowohl Formausnehmungen an der Oberplatte als auch an der Unterplatte vorgesehen. Der domartige Abschnitt ist des Weiteren nach vorn durch eine Stirnplatte begrenzt, in der sich mittig die Durchgangsbohrung für die Klemmschraube befindet. Ausgehend von dieser Stirnplatte erstrecken sich links und rechts zwei Seitenwände des domartigen Abschnitts. Diese Seitenwände sind zwischen der Ober- und Unterplatte des Klemmelements angeordnet und stützen damit beide Platten zusätzlich ab.

Durch den besonderen Aufbau des domartigen Abschnitts ergibt sich an der Rückseite des hinteren Klemmelements in vorteilhafter Weise ein Aufnahmeraum, der von hinten zugänglich ist. Ist die Stirnplatte des domartigen Abschnittes quadratisch, so hat auch dieser Aufnahmeraum einen quadratischen Querschnitt für eine vorzugsweise an den Aufnahmeraum angepasste Mutter. In diese Mutter greift die Klemmschraube ein. Da die Mutter insbesondere verdrehsicher im Aufnahmeraum gehalten werden kann, wird in einfacher Weise eine Schraubverbindung erzielt. Es kann auf diese Weise auf ein Gewinde an dem hinteren Klemmhalter verzichtet werden. Die Stirnplatte des domartigen Abschnitts kann selbstverständlich auch einen anderen Querschnitt besitzen. Auch in diesem Fall kann beispielsweise eine Vierkantmutter im Aufnahmeraum des hinteren Klemmelementes beim Herstellen der Schraubverbindung verdrehsicher gehalten werden.

Zur Verbindung mit einer Konsole, beispielsweise einer Wandkonsole zur Befestigung des Röhrenheizkörpers an der Wand oder zum Aufstellen des Röhrenheizkörpers unter Benutzung einer Standkonsole, besitzt das hintere Klemmelement entsprechende Verbindungsmittel. Dies kann beispielsweise eine von der Unterplatte ausgehende Abkröpfung sein, die einen Haken bildet, der in eine entsprechende Ausnehmung in der Konsole eingeschoben wird. Es ist jedoch auch möglich, die Oberplatte mit einer entsprechenden Abkröpfung oder Abbiegung zu versehen, die einen Haken zum Einhängen in eine Konsole bildet. Zusätzlich erhöhen die Abkröpfungen an der Ober- und Unterplatte die Stabilität des hinteren Klemmelements.

Ein solches Klemmelement lässt sich in bekannter Weise leicht an einem Röhrenheizkörper montieren, indem ein Klemmelement aus seiner horizontalen Ausrichtung um die Mittelachse der Klemmschraube herum in eine vertikale Ausrichtung gedreht wird und so leicht zwischen den Röhren des Röhrenheizkörpers hindurch gesteckt werden kann. Befindet sich das Klemmelement hinter den Röhren wird es wieder zurückgedreht und die Klemmschraube angezogen bis der Befestigungsfall, also ein sicheres Verklemmen der Röhren zwischen den beiden Klemmelementen erzielt ist. Im Befestigungsfall greift der domartige Abschnitt des hinteren Klemmelements zwischen zwei Röhren des Röhrenheizkörpers. Da die Formausnehmungen am hinteren Klemmelement bis zum domartigen Abschnitt reichen, berührt der domartigen Abschnitt im Befestigungsfall seitlich jeweils eine Röhre. Bei einer besonders vorteilhaften Ausführungsform ist vorgesehen, dass sich im Bereich des domartigen Abschnitts ein Andruckpunkt der Formausnehmung befindet. Bei einer solchen Ausführungsform wird ein weiterer Andruckpunkt der Formausnehmungen des hinteren Klemmelements so vorgesehen, dass die Kontaktstelle sich an der Rückseite der Röhren befindet, so dass die Röhre zweiseitig gefasst wird. Dabei kann es sich um eine oder mehrere weitere Kontaktstellen handeln. Darüber hinaus ist es vorteilhaft, auch entsprechende Andruckpunkte in den Formausnehmungen des vorderen Klemmelements vorzusehen.

Bei dem vorderen Klemmelement handelt es sich vorzugsweise um ein im Querschnitt C-förmiges Metallteil, nämlich einer Grundplatte, welche die Vorderseite bildet und von der zwei senkrechte Seitenflansche abragen. Diese Seitenflansche besitzen die Formausnehmung, d.h. sowohl am oberen als auch am unteren Seitenflansch ist je eine Formausnehmung vorgesehen. Mittig durch die Grundplatte führt die Durchgangsbohrung für die Klemmschraube.

Das vordere Klemmelement lässt sich in einfacher Weise aus einer Metallplatte herstellen. In die Metallplatte werden die Durchgangsbohrung und gewünschten Formausnehmungen eingestanzt und dann die Seitenflansche durch Abbiegen von der Grundplatte erzeugt. Auch das hintere Klemmelement lässt sich in einfacher Weise aus einer Metallplatte fertigen. In diese Metallplatte werden die entsprechenden Ausnehmungen eingestanzt. Ausgehend von der Stirnplatte werden durch senkrechtes Abbiegen die Oberplatte, die Unterplatte und die Seitenwände des domartigen Abschnitts erzeugt, ebenso werden die Abkröpfung an der Oberplatte und Unterplatte durch Abbiegen leicht erhalten. Für die erfindungsgemäße Anordnung, insbesondere die Klemmelemente, ist ein geringer Materialeinsatz und auch ein geringer Fertigungsaufwand notwendig. Die Vorrichtung ist einfach aufgebaut, nämlich aus den zwei Klemmelementen, der Klemmschraube, der Mutter und bedarfsweise auch einem Federelement, welches über die Klemmmutter geschoben und zwischen den Klemmelementen angeordnet ist. Dieses Federelement dient bei der Demontage als Rückstellfeder, um die Klemmelemente leichter von den Röhren zu lösen. Trotz des einfachen Aufbaus dieser erfindungsgemäßen Anordnung weist diese eine sehr hohe Stabilität auf, die gegenüber bekannten Klemmhaltern höhere Prüfbelastungen bzgl. der Haltekräfte erfüllt.

Nachfolgend wird die Erfindung anhand von Zeichnungen an einem Ausführungsbeispiel näher beschrieben. Es zeigen:
- Fig. 1: eine perspektivische Ansicht der Vorrichtung der erfindungsgemäßen Anordnung von vorn,
- Fig. 2: eine perspektivische Ansicht der Vorrichtung von Fig. 1 von hinten,
- Fig. 3: eine perspektivische Ansicht der Vorrichtung der erfindungsgemäßen Anordnung von Fig. 1 im Befestigungsfall von vorn,
- Fig. 4: eine perspektivische Ansicht der Vorrichtung der erfindungsgemäßen Anordnung von Fig. 1 im Befestigungsfall von hinten,
- Fig. 5: eine Draufsicht auf die Vorrichtung der erfindungsgemäßen Anordnung gemäß Fig. 1 im Befestigungsfall,

- Fig. 6: eine Konsole.

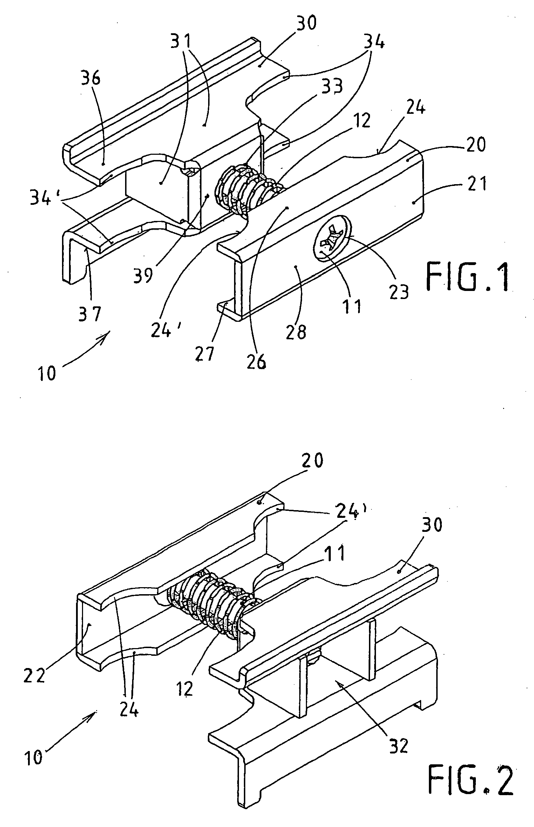

In den Fig. 1 bis 5 ist eine Vorrichtung 10 der erfindungsgemäßen Anordnung zur lösbaren Halterung von Röhren 40, 41 eines nicht gezeigten Röhrenheizkörpers gezeigt. In den Fig. 1 und 2 ist die Vorrichtung 10 in perspektivischer Ansicht von vorn und hinten zu sehen. Sie ist aufgebaut aus zwei Klemmhaltern 20, 30. Der vordere Klemmhalter 20 ist ein im Querschnitt C-förmiges Metallteil, dessen Grundplatte die Vorderseite 21 bildet und dessen Seitenflansche 26, 27 beide gegenüberliegend die Formausnehmungen 24, 24' besitzen. Ausgehend von der Vorderseite 21 ist mittig im Klemmelement 20 eine Durchgangsbohrung 23 vorgesehen, in die eine Klemmschraube 11 eingreift. Mittels dieser Klemmschraube 11 ist das vordere Klemmteil 20 mit dem hinteren Klemmteil 30 verbunden.

Bei dem hinteren Klemmteil 30 handelt es sich ebenfalls um ein Metallteil. Dieses besitzt zur Erhöhung der Stabilität einen domartigen Abschnitt 31, der nach vorn durch eine Stirnplatte 39 begrenzt wird. Mittig in die Stirnplatte 39 ist zum Einführen der Klemmschraube 11 eine Durchgangsbohrung 33 eingebracht. Ausgehend von dieser Stirnplatte 39 besitzt der domartige Abschnitt 31 vier Wände. Zwei Wände werden durch die Oberplatte 36 und die Unterplatte 37 und zwei weitere Wände werden durch entsprechende Seitenwände gebildet. Diese Seitenwände greifen zwischen die Oberplatte 36 und Unterplatte 37 ein und stützen diese ab. Der domartige Abschnitt 31, der durch die vier Wände begrenzt ist, bildet einen von der Rückseite zugänglichen Aufnahmeraum 32, siehe Fig. 2. In diesen Aufnahmeraum 32 ist das Ende der Klemmschraube 11 durch die Durchgangsbohrung 33 eingeführt. Diese Klemmschraube 11 ist endseitig mit einer nicht gezeigten Mutter verbunden. Hierbei handelt es sich vorzugsweise um eine Vierkantmutter, die verdrehsicher in dem Aufnahmeraum 32 gehalten wird.

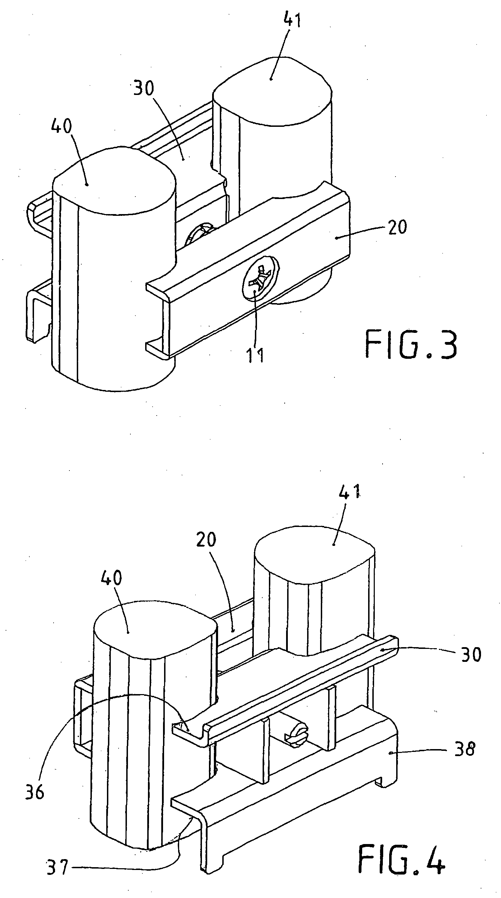

Beidseitig vom domartigen Abschnitt 31 erstrecken sich in symmetrischer Anordnung flügelartig die Oberplatte 36 und Unterplatte 37. Die Oberplatte 36 und die Unterplatte 37 des hinteren Klemmelements 30 besitzen beide Formausnehmungen 34, 34'. Die Formausnehmungen 34, 34' an der Oberplatte 36 und an der Unterplatte 37 erstrecken sich ausgehend von den freien seitlichen Enden der Oberplatte 36 und Unterplatte 37 bis hin zum domartigen Abschnitt 31, der auf diese Weise im Befestigungsfall in Berührung mit den Röhren 40, 41 des Röhrenheizkörpers kommt. Dies ist besser aus den Fig. 3 und Fig. 4 zu ersehen. Deutlich wird, dass die Klemmelemente 20, 30 die Röhren 40, 41 im Befestigungsfall zwischen sich aufnehmen und wie Klemmbacken halten. Die Klemmverbindung wird durch die Klemmschraube 11 erzielt, die mittig durch die Klemmelemente 20, 30, nämlich durch die Durchgangsbohrungen 23, 33 geht und in Verbindung mit der im Aufnahmeraum 32 des Klemmelements 30 angeordneten Mutter steht. Durch das Einschrauben dieser Klemmschraube 11 wird eine Klemmkraft erzeugt, die im Befestigungsfall eine stabile Halterung der Röhren 40, 41 in der erfindungsgemäßen Vorrichtung ermöglicht. Der Befestigungsfall ist erreicht, wenn die Klemmelemente 20, 30 die Röhren 40, 41 durch Klemmverbindung halten, so dass eine vertikale und axiale Belastung nicht zu einem Herauslösen der Röhren 40, 41 aus der Vorrichtung 10 führt.

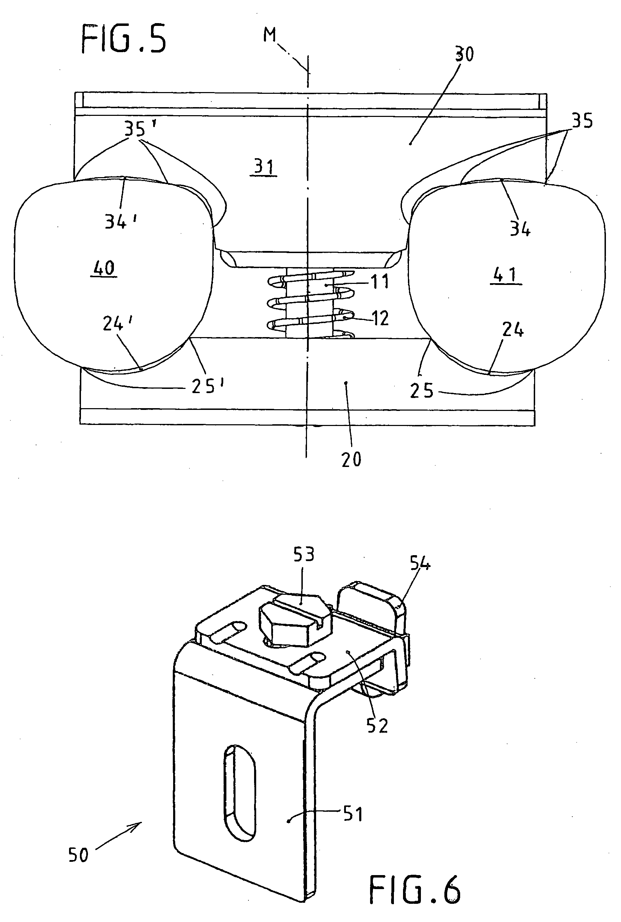

Der Befestigungsfall ist insbesondere auch aus Fig. 5 zu ersehen. Die Klemmschraube 11 ist mittig in das Klemmelement 20 und in das Klemmelement 30 eingeführt. Ausgehend von der Mittelachse der Klemmschraube 11 sind die Klemmelemente 20, 30 im Befestigungsfall spiegelsymmetrisch. Der domartige Abschnitt 31 greift zwischen die Röhren 40, 41 und berührt diese in einem Andruckpunkt 35' (in etwa 2 Uhr-Stellung bezogen auf Röhre 40) und in einem Andruckpunkt 35 (in etwa 10 Uhr-Stellung bezogen auf Röhre 41).

Diese Andruckpunkte 35, 35' sind Teil der Formausnehmung 34, 34'. Diese Formausnehmungen 34, 34' sind an den Umfang und die Kontur der Röhren 40, 41 angepasst. Bei anderen Querschnitten und Umfangslinien der Röhren 40, 41 werden andere Konturen für die Formausnehmungen 34, 34' des Klemmelements 30 ausgewählt. An dieser Kontur für die Formausnehmung 34, 34' sind Andruckpunkte 35, 35' vorgesehen. Diese Andruckpunkte 35, 35' der Formausnehmung 34, 34'stellen kleine konvexe Ausbauchungen herausragend aus der passend zum Umfang der Röhre 40 vorgesehene Konturlinie dar. Neben dem Andruckpunkt 35, 35' im Bereich des domartigen Abschnitts 31 mit den Röhren 40, 41 sind im Ausführungsbeispiel gemäß Fig. 5 bei den Formausnehmungen 34, 34' zwei weitere Andruckpunkte 35, 35' vorgesehen, nämlich an der Rückseite der Röhren 40, 41. Betrachtet man Fig. 5, so sind weitere Andruckpunkte 35' (in etwa in etwa 11-Uhr-Stellung und 1-Uhr-Stellung bezogen auf Röhre 40) und Andruckpunkte 35 (in etwa in etwa 11-Uhr-Stellung und 1-Uhr-Stellung bezogen auf Röhre 41) vorgesehen. Die Röhren 40, 41 werden damit durch das Klemmelement 30 an der Oberplatte 36 und an der Unterplatte 37 jeweils an drei Andruckpunkten 35 und an drei Andruckpunkten 35' kontaktiert und gegenüberliegend vom Klemmelements 20 an jeweils zwei Andruckpunkten 25 und zwei Andruckpunkte 25' der Seitenflansche 26, 27. Dieser mehrfache punktförmige Kontakt über einen weiten Umfangsbereich der Röhren 40, 41 mit den Klemmelementen 20, 30 hat sich als besonders vorteilhaft hinsichtlich der Haltekraft herausgestellt.

Die Klemmelemente 20, 30 besitzen in diesem Ausführungsbeispiel die gleiche Länge. Der äußerste Andruckpunkt 25 der Formausnehmung 24 ist gegenüberliegend zum äußeren Andruckpunkt 35 der Formausnehmung 34 und der äußere Andruckpunkt 25' ist gegenüberliegend zum äußeren Andruckpunkt 35'. Dies hat sich zusätzlich als vorteilhaft herausgestellt.

Die Vorrichtung 10 der erfindungsgemäßen Anordnung hält sowohl die geforderte axiale Belastung, als auch eine vertikaler Belastung durch Druck auf den Röhrenheizkörper von oben aus, ohne dass sich die Klemmverbindung zur Halterung der Röhren 40, 41 löst.

Ist die Vorrichtung 10 mit dem Röhrenheizkörper verbunden, d.h. die Röhre 40, 41 zwischen den Klemmhaltern 20, 30 verklemmt, so kann der Röhrenheizkörper mittels einer Konsole 50 an einer Wand oder an einem Standfuß befestigt werden. In Fig. 6 ist beispielsweise eine bekannte Konsole 50 gezeigt, die aus zwei Winkelteilen 51, 52 besteht, die über eine Schraube 53 in Verbindung stehen. Das Winkelteil 51 besitzt ein Langloch für ein Verbindungsmittel zur Befestigung an einer Wand. Der Winkelteil 52 besitzt einen Haken 54. Hinter diesen Haken 54 kann eine am Klemmteil 30 vorgesehene Abkröpfung 38 eingreifen. Diese Abkröpfung 38 ist am besten aus Fig. 4 zu ersehen. Diese Abkröpfung 38 stellt eine Abbiegung der Unterplatte 37 des Klemmelements 30 dar. Sowohl die Oberseite 36 als auch die Unterseite 37 besitzen eine Abkröpfung, zum einen aus Stabilitätsgründen und zum anderen, wie vorbeschrieben, zur Verbindung mit einer Konsole 50.

Zur Montage eines Röhrenheizkörpers werden je nach Größe des Röhrenheizkörpers auch mehrere Vorrichtungen 10 eingesetzt. Die Vorrichtung 10 kann in einfacher Weise montiert und demontiert werden, da die Klemmhalter 20, 30 durch die Klemmschraube 11 vor und nach der Montage um die Mittelachse M der Klemmschraube 11 drehbeweglich sind, so dass ein Klemmelement 20 oder 30 zwischen den Röhren 40, 41 in vertikaler Ausrichtung durchgeschoben und anschließend wieder in vertikaler Ausrichtung gebracht werden kann. Für eine entsprechende Befestigung und in gleicher Weise bei der Demontage wird die Klemmschraube 11 gelöst und damit die Klemmelemente 20, 30 voneinander entfernt werden. Dieser Vorgang wird durch ein zwischen den Klemmelementen 20, 30 vorgesehenes Federelement 12 unterstützt.

Der Erfindung ist nicht auf das gezeigte Ausführungsbeispiel beschränkt.

### Bezugszeichenliste

- 10: Vorrichtung
- 11: Klemmschraube
- 12: Federelement

- 20: Klemmelement, vordere
- 21: Vorderseite
- 22: Rückseite
- 23: Durchgangsbohrung
- 24, 24': Formausnehmung
- 25, 25': Andruckpunkte
- 26: Seitenflansch
- 27: Seitenflansch
- 28: Grundplatte

- 30: Klemmelement, hintere
- 31: domartiger Abschnitt
- 32: Aufnahmeraum
- 33: Durchgangsbohrung
- 34, 34': Formausnehmung
- 35, 35': Andruckpunkte
- 36: Oberplatte
- 37: Unterplatte
- 38: Abkröpfung
- 39: Stirnplatte

- 40: Röhre
- 41: Röhre
- 50: Konsole
- 51: Winkelteil
- 52: Winkelteil
- 53: Schraube
- 54: Haken

- M: Mittelachse

## Patentansprüche

1. Anordnung aus einer Vorrichtung (10) und Röhren (40, 41) zur lösbaren Halterung der Röhren (40, 41) eines Röhrenheizkörpers an einer Konsole (50),
mit zwei Klemmelementen (20, 30), die über eine Klemmschraube (11) miteinander in Verbindung stehen, wobei die Klemmschraube (11) durch mittig an den Klemmelementen (20, 30) vorgesehenen Durchgangsbohrungen (23, 33) geführt ist,
wobei das vordere Klemmelement (20) mindestens zwei Formausnehmungen (24, 24') und das hintere Klemmelement (30) mindestens zwei Formausnehmungen (34, 34') besitzt und im Befestigungsfall zur Halterung eines Röhrenheizkörpers die Röhren (40, 41) zwischen den Klemmelementen (20, 30) im Bereich der Formausnehmungen (24, 34; 24', 34') verspannbar sind,
wobei die Formausnehmungen (24, 34; 24', 34') eine an den Umfang der Röhren (40, 41) angepasste Kontur aufweisen,
**dadurch gekennzeichnet, dass**
die Formausnehmungen (24, 24; 34, 34') zumindest eines Klemmelements (20, 30) mit Andruckpunkten (25, 25'; 35, 35') versehen sind, welche die Kontur der Formausnehmungen (24, 34; 24', 34') in Richtung der zu haltenden Röhren (40, 41) überragen.

2. Anordnung nach Anspruch 1, **dadurch gekennzeichnet, dass** 2 bis 3 Andruckpunkte (25, 25'; 35, 35') je Formausnehmung (24, 24; 34, 34') vorgesehen sind.

3. Anordnung nach Anspruch 1 oder 2, **dadurch gekennzeichnet, dass** das hintere Klemmelement (30) einen nach vorn weisenden domartigen Abschnitt (31) aufweist, der im Befestigungsfall zwischen die Röhren (40, 41) greift, wobei der domartige Abschnitt (31) seitlich durch die Formausnehmungen (34, 34') begrenzt ist.

4. Anordnung nach Anspruch 3, **dadurch gekennzeichnet, dass** durch eine vordere Stirnplatte (39) des domartigen Abschnitts (31) die Durchgangsbohrung (33) für die Klemmschraube (11) verläuft.

5. Anordnung nach Anspruch 4, **dadurch gekennzeichnet, dass** der domartige Abschnitt (31) durch die Stirnplatte (39), durch Abschnitte der Oberseite (36) sowie Unterseite (37) des hinteren Klemmelementes (30) und durch zwei Seitenwände gebildet ist, so dass sich auf der Rückseite des hinteren Klemmelementes (30) ein nur rückseitig geöffneter Aufnahmeraum (32) für eine mit der Klemmschraube (11) zusammenwirkenden Mutter ergibt, vorzugsweise ein im Querschnitt rechteckiger Aufnahmeraum (32) für eine Vierkantmutter.

6. Anordnung nach einem der Ansprüche 1 bis 5, **dadurch gekennzeichnet, dass** die Oberseite (36) und die Unterseite (37) des hinteren Klemmelementes (30) an ihrem freien Ende senkrecht abgekröpft sind, wobei vorzugsweise eine Abkröpfung (38) der Verbindung mit einer Konsole (50) dient.

7. Anordnung mit einer Konsole und einer Anordnung nach Anspruch 6, **dadurch gekennzeichnet, dass** mittels einer Konsole (50) eine Befestigung an einer Wand oder an einem Standfuß realisierbar ist.

8. Anordnung nach Anspruch 1, **dadurch gekennzeichnet, dass** das vordere Klemmelement (20) einen C-förmigen Querschnitt aufweist, nämlich eine Grundplatte (28) mit zwei senkrecht abragenden Seitenflanschen (26, 27) besitzt, wobei in die Seitenflansche (26, 27) die Formausnehmungen (24, 24') eingeformt sind.

9. Anordnung nach Anspruch 1, **dadurch gekennzeichnet, dass** zur leichteren Demontage zwischen den Klemmelementen (20, 30) ein Federelement (12) angeordnet ist.

10. Anordnung nach Anspruch 1, **dadurch gekennzeichnet, dass** die Klemmelemente (20, 30) aus Metall bestehen und durch Stanzen sowie Biegen hergestellt sind.

## Claims

1. Arrangement of a device (10) and tubes (40, 41) for holding the removeable tubes (40, 41) of a tube heater on a console (50),
using two clamping elements (20, 30), connected together by a clamping screw (11), whereby, the clamping screw (11) is guided through passage holes (23, 33) located in the centre on the clamping elements (20, 30),
whereby, the front clamping element (20) has a minimum of two mould recesses (24, 24') and the rear clamping element (30) has a minimum of two mould recesses (34, 34') and, when attached to the bracket of a tube heater, the tubes (40, 41) can be tensioned between the clamping elements (20, 30) in the area of the mould recesses (24, 34; 24', 34'),
whereby, the mould recesses (24, 34; 24', 34') feature an adapted contour on the circumference of the tubes (40, 41),
**characterized in that**
the mould recesses (24, 24; 34, 34') are provided with a minimum of one clamping element (20, 30) with contact points (25, 25'; 35, 35') that protrude the contour of the mould recesses (24, 34; 24', 34') in the direction of the tubes to be held (40, 41).

2. Arrangement in accordance with claim 1, **characterized in that** 2 to 3 contact points (25, 25'; 35, 35') are provided in each mould recess (24, 24; 34, 34').

3. Arrangement in accordance with claim 1 or 2, **characterized in that** the rear clamping element (30) features dome-like section (31) that, when attached, grips between the tubes (40, 41), whereby, the dome-like section (31) is restricted at the side by the mould recesses (34, 34').

4. Arrangement in accordance with claim 3, **characterized in that** the passage hole (33) for the clamping screw (11) runs through a forward front plate (39) of the dome-like section (31).

5. Arrangement in accordance with claim 4, **characterized in that** the dome-like section (31) is formed by the front plate (39), the sections of the upper side (36), and lower side (37) of the rear clamping element (30) and by two sidewalls, so that, on the rear of the rear clamping element (30), there is only one opening reception space (32) for a nut that interacts with the clamping screw (11), preferably a square reception space (32) in the cross-section for a square nut.

6. Arrangement in accordance with one of the claims 1 to 5, **characterized in that** the upper side (36) and the lower side (37) of the rear clamping element (30) is contoured vertically at its free end, whereby, one contour (38) is preferably used as the connection to a console (50).

7. Arrangement with a bracket and an arrangement in accordance with claim 6, **characterized in that**, using a bracket (50), an attachment can be realized to a wall or to a pedestal.

8. Arrangement in accordance with claim 1,**characterized in that** the front clamping element (20) features a C-shaped section, has namely a base plate (28) with two vertical, protruding side flanges (26, 27), whereby, the mould recesses (24, 24') are formed in the side flange (26, 27).

9. Arrangement in accordance with claim 1, **characterized in that** a spring element (12) is arranged for easier removal between the clamping elements (20, 30).

10. Arrangement in accordance with claim 1, **characterized in that** the clamping elements (20, 30) are made from metal and manufactured by stamping and bending.

## Revendications

1. Agencement composé d'un dispositif (10) et de tuyaux (40, 41) pour une fixation amovible des tuyaux (40, 41) d'un corps tubulaire de chauffage contre une console (50),
comprenant deux éléments de bridage (20, 30) mis en liaison réciproque par une vis de bridage (11), sachant que la vis de bridage (11) est guidée par des alésages traversants (23, 33) prévus au milieu des éléments de bridage (20, 30),
sachant que l'élément de bridage avant (20) possède au moins deux évidements (24, 24") et que l'élément de bridage arrière (30) possède au moins deux évidements (34, 34') et qu'en cas de fixation pour retenir un corps tubulaire de chauffage les tuyaux (40, 41) peuvent être serrés entre les éléments de bridage (20, 30) dans la zone des évidements (24, 34 ; 24', 34'),
sachant que les évidements (24, 34 ; 24', 34') présentent un contour adapté à la circonférence des tuyaux (40, 41),
**caractérisé en ce que**
les évidements (24, 24; 34, 34') d'au moins un élément de bridage (20, 30) sont munis de points d'applique (25, 25'; 35, 35') qui dépassent du contour des évidements (24, 34; 24', 34') en direction des tuyaux (40, 41) à retenir.

2. Agencement selon la revendication 1, **caractérisé en ce que** sont prévus 2 à 3 points d'applique (25, 25'; 35, 35') par évidement (24, 24; 34, 34').

3. Agencement selon la revendication 1 ou 2, **caractérisé en ce que** l'élément de bridage arrière (30) présente un segment (31) en forme de dôme regardant vers l'avant, qui en cas de fixation pénètre entre les tuyaux (40, 41), sachant que le segment (31) en forme de dôme est limité latéralement par les évidements (34, 34').

4. Agencement selon la revendication 3, **caractérisé en ce que** l'alésage continu (33) destiné à la vis de bridage (11) traverse une plaque frontale avant (39) du segment (31) en forme de dôme.

5. Agencement selon la revendication 4, **caractérisé en ce que** le segment (31) en forme de dôme est formé par la plaque frontale (39) par des segments du côté supérieur (36) ainsi que du côté inférieur (37) de l'élément de bridage arrière (30) et par deux parois latérales, de sorte qu'il en résulte, au dos de l'élément de bridage arrière (30), un compartiment réceptacle (32) ouvert au dos et recevant l'écrou qui interagit avec la vis de bridage (11), de préférence un compartiment réceptacle de section rectangulaire (32) pour un écrou quadrangulaire.

6. Agencement selon l'une des revendications 1 à 5, **caractérisé en ce que** le côté supérieur (36) et le côté inférieur (37) de l'élément de bridage arrière (30) sont coudés verticalement en leur extrémité libre, sachant que de préférence un coude (38) sert à la jonction avec une console (50).

7. Agencement avec une console et avec un agencement selon la revendication 6, **caractérisé en ce qu'**au moyen d'une console (50), il est possible de réaliser une fixation contre un mur ou contre un pied vertical.

8. Agencement selon la revendication 1, **caractérisé en ce que** l'élément de bridage (20) présente une section en forme de C, à savoir une plaque de base (28) avec deux flasques latéraux (26, 27) faisant saillie verticalement, sachant que dans les flasques latéraux (26, 27) ont été moulés les évidements (24, 24').

9. Agencement selon la revendication 1, **caractérisé en ce qu'**un élément ressort (12) est agencé pour faciliter le démontage entre les éléments de bridage (20, 30).

10. Agencement selon la revendication 1, **caractérisé en ce que** les éléments de bridage (20, 30) sont en métal et qu'ils sont fabriqués par emboutissage et cintrage.
